# FASCICULE DE BREVET EUROPEEN

(11) **EP 4 240 604 B1**
(45) Date de publication et mention de la délivrance du brevet: **04.12.2024**
(21) Numéro de dépôt: 21783529.7
(22) Date de dépôt: 30.09.2021
(51) Int. Cl.: B60H 1/32, B60K 11/02, F25B 43/00

(54) **MODULE DE REFROIDISSEMENT POUR VÉHICULE AUTOMOBILE ÉLECTRIQUE OU HYBRIDE**
KÜHLMODUL FÜR EIN ELEKTRO- ODER HYBRIDKRAFTFAHRZEUG
COOLING MODULE FOR AN ELECTRIC OR HYBRID MOTOR VEHICLE

(30) Priorité: 04.11.2020 FR 2011326
(43) Date de publication de la demande: 13.09.2023
(73) Titulaire: VALEO SYSTEMES THERMIQUES, 78320 Le Mesnil Saint-Denis (FR)
(72) Inventeur: MAMMERI, Amrid, 78322 Le Mesnil-Saint-Denis Cedex (FR); AZZOUZ, Kamel, 78322 Le Mesnil-Saint-Denis Cedex (FR); GARNIER, Sebastien, 78322 Le Mesnil-Saint-Denis Cedex (FR); TRAORE, Issiaka, 78322 Le Mesnil-Saint-Denis Cedex (FR)
(74) Mandataire: Valeo Systèmes Thermiques
(86) Numéro de dépôt international: PCT/EP2021/076990
(87) Numéro de publication internationale: WO 2022/096203

(56) Documents cités:
- CN-A- 102 198 792
- DE-A1- 102010 026 323
- IT-A1- TO 970 294
- KR-B1- 101 696 883
- US-A1- 2006 102 109

## Description

La présente invention se rapporte à un module de refroidissement pour véhicule automobile électrique ou hybride.

Un module de refroidissement (ou module d'échange de chaleur) d'un véhicule automobile comporte classiquement au moins un échangeur de chaleur et un dispositif de ventilation adapté à générer un flux d'air au contact du au moins un échangeur de chaleur. Le dispositif de ventilation permet ainsi, par exemple, de générer un flux d'air au contact de l'échangeur chaleur, à l'arrêt du véhicule ou à faible vitesse de roulage.

Dans les véhicules automobiles à moteur thermique classique, le au moins un échangeur de chaleur est de forme sensiblement carrée, le dispositif de ventilation étant alors un ventilateur à hélice dont le diamètre est sensiblement égal au côté du carré formé par l'échangeur de chaleur.

Classiquement, l'échangeur de chaleur est alors placé en regard d'au moins deux baies de refroidissement, formées dans la face avant de la carrosserie du véhicule automobile. Une première baie de refroidissement est située au-dessus du pare-chocs tandis qu'une deuxième baie est située au-dessous du pare-chocs. Une telle configuration est préférée car le moteur thermique doit également être alimenté en air, l'admission d'air du moteur étant classiquement située dans le passage du flux d'air traversant la baie de refroidissement supérieure.

Cependant, les véhicules électriques sont de préférence munis uniquement de baies de refroidissement situées sous le pare-chocs, de préférence encore d'une unique baie de refroidissement située sous le pare-chocs.

En effet, le moteur électrique n'a pas besoin d'être alimenté en air. Et la diminution du nombre de baies de refroidissement et de leur taille permet d'améliorer les caractéristiques aérodynamiques du véhicule électrique. Ceci se traduit également par une meilleure autonomie et une plus grande vitesse de pointe du véhicule automobile. Ainsi, selon les exigences des constructeurs, pour des véhicules électriques et hybrides, notamment afin d'améliorer le coefficient de pénétration dans l'air, la hauteur des échangeurs de chaleur présents dans ces baies de refroidissement est amenée à diminuer et leur épaisseur à augmenter.

Cependant, l'empilement des échangeurs de chaleur dans le sens du flux d'air les traversant implique que chaque échangeur de chaleur disposé en amont impact les performances du ou des échangeurs placés en aval. Le document US 2006/102109 A1 divulgue un module de refroidissement d'un type connu, comportant un échangeur de chaleur et une bouteille déshydratante disposée dans une partie amont du module de refroidissement.

Un des buts de la présente invention est donc de remédier au moins partiellement aux inconvénients de l'art antérieur et de proposer module de refroidissement amélioré permettant des performances les meilleures possibles pour les différents échangeurs de chaleur.

La présente invention concerne donc un module de refroidissement pour véhicule automobile électrique ou hybride, ledit module de refroidissement étant destiné à être traversé par un flux d'air et comportant au moins un échangeur de chaleur (et une bouteille déshydratante connectée au sein d'un circuit de refroidissement, la bouteille déshydratante étant disposée dans une partie amont du module de refroidissement selon une direction longitudinale allant de l'avant vers l'arrière dudit module de refroidissement, selon la direction longitudinale dudit module de refroidissement, la bouteille déshydratante étant disposée en aval et en regard d'un élément déflecteur.

Selon un aspect de l'invention, l'au moins un échangeur de chaleur disposé le plus en amont selon la direction longitudinale dudit module de refroidissement et la bouteille déshydratante sont disposés sur un même plan.

Selon un autre aspect de l'invention, la bouteille déshydratante est disposée de sorte que son axe soit perpendiculaire à l'axe de la hauteur dudit au moins un échangeur de chaleur. Selon un autre aspect de l'invention, l'élément déflecteur est une traverse d'un cadre d'un dispositif d'obturation de face avant disposé en amont de l'au moins un échangeur de chaleur.

Selon un autre aspect de l'invention, l'élément déflecteur est une poutre transversale du châssis du véhicule automobile disposée en amont de l'au moins un échangeur de chaleur. Selon un autre aspect de l'invention, le module de refroidissement comporte deux échangeurs de chaleur disposés sur un même plan et disposés le plus en amont selon la direction longitudinale dudit module de refroidissement, la bouteille déshydratante étant disposée entre lesdits échangeurs de chaleur.

Selon un autre aspect de l'invention, le module de refroidissement comporte :
- un premier échangeur de chaleur configuré pour être un condenseur connecté au sein d'un circuit de refroidissement,
- un deuxième échangeur de chaleur configuré pour être un radiateur basse température connecté au sein d'un circuit de gestion thermique, et
- un troisième échangeur de chaleur configuré pour être un sous-refroidisseur connecté au sein du circuit de refroidissement.

Selon un autre aspect de l'invention, le circuit de gestion thermique comporte dans le sens de circulation d'un fluide caloporteur :
- une pompe,
- un premier refroidisseur, et
- le deuxième échangeur de chaleur.

Selon un autre aspect de l'invention, le circuit de refroidissement comporte dans le sens de circulation d'un fluide réfrigérant :
- un compresseur,
- le premier échangeur de chaleur,
- la bouteille déshydratante,
- le troisième échangeur de chaleur,
- un premier dispositif de détente, et
- un deuxième refroidisseur.

Selon un autre aspect de l'invention, le circuit de refroidissement comporte une branche de dérivation connectée en parallèle du premier dispositif de détente et du premier refroidisseur, ladite branche de dérivation comportant un deuxième dispositif de détente disposé en amont d'un troisième refroidisseur.

Selon un autre aspect de l'invention, le deuxième et le troisième échangeur de chaleur sont disposé sur un même plan en amont du premier échangeur de chaleur selon la direction longitudinale dudit module de refroidissement.

Selon un autre aspect de l'invention, le module de refroidissement comporte un quatrième échangeur de chaleur configuré pour être un radiateur basse température et disposé en aval du premier échangeur de chaleur selon la direction longitudinale dudit module de refroidissement.

D'autres caractéristiques et avantages de la présente invention apparaîtront plus clairement à la lecture de la description suivante, fournie à titre illustratif et non limitatif, et des dessins annexés dans lesquels :
[Fig 1] la figure 1 montre une représentation schématique de l'avant d'un véhicule automobile en vue de côté,
[Fig 2] la figure 2 montre une représentation schématique en perspective et en coupe partielle de l'avant d'un véhicule automobile et d'un module de refroidissement,
[Fig 3] la figure 3 montre une représentation schématique de circuits de gestion thermique,
[Fig 4] la figure 4 montre une représentation schématique en perspective semitransparente d'un module de refroidissement,
[Fig 5] la figure 5 montre une représentation schématique en vue de côté et en semitransparente d'un module de refroidissement selon un premier mode de réalisation,
[Fig 6] la figure 6 montre une représentation schématique en vue de côté et en semitransparente d'un module de refroidissement selon un deuxième mode de réalisation. Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou inter-changées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément inter-changer de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un flux d'air. A contrario, on entend par « placé en aval » qu'un élément est placé après un autre par rapport au sens de circulation d'un flux.

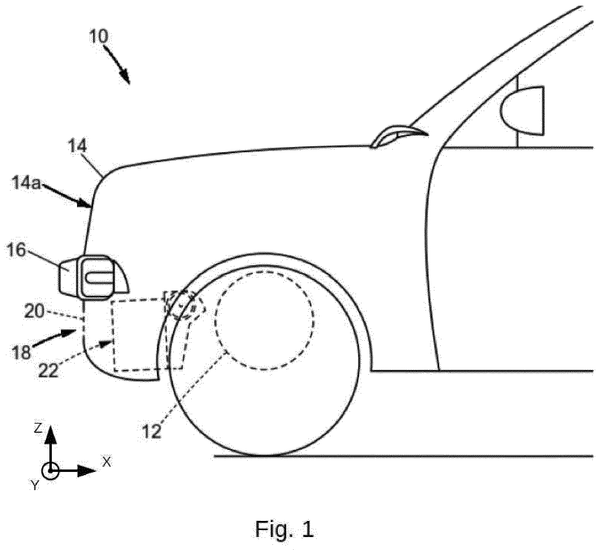

Sur les figures 1, 2, 4, 5 et 6, est représenté un trièdre XYZ afin de définir l'orientation des différents éléments les uns des autres. Une première direction, notée X, correspond à une direction longitudinale du véhicule. Elle correspond également à la direction opposée de la direction d'avancement du véhicule. Une deuxième direction, notée Y, est une direction latérale ou transversale. Enfin, une troisième direction, notée Z, est verticale. Les directions, X, Y, Z sont orthogonales deux à deux.

Dans la présente description, on entend par « bas » ou « basse » la position d'un élément par rapport à un autre selon la direction Z déterminée ci-dessus.

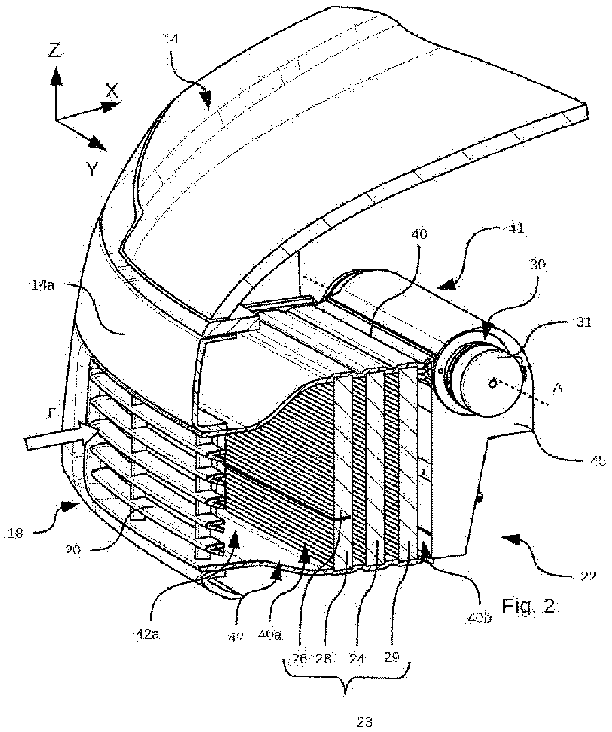

Sur les figures 1 et 2, le module de refroidissement selon la présente invention est illustré dans une position fonctionnelle, c'est-à-dire quand il est disposé au sein d'un véhicule automobile.

La figure 1 illustre de manière schématique la partie avant d'un véhicule automobile 10 électrique ou hybride pouvant comporter un moteur électrique 12. Le véhicule 10 comporte notamment une carrosserie 14 et un pare-chocs 16 portés par un châssis (non représenté) du véhicule automobile 10. La carrosserie 14 définit une baie de refroidissement 18, c'est-à-dire une ouverture à travers la carrosserie 14. La baie de refroidissement 18 est ici unique. Cette baie de refroidissement 18 se trouve de préférence en partie basse de la face avant 14a de la carrosserie 14. Dans l'exemple illustré, la baie de refroidissement 18 est située sous le pare-chocs 16. Une grille 20 peut être disposée dans la baie de refroidissement 18 pour éviter que des projectiles puissent traverser la baie de refroidissement 18. Un module de refroidissement 22 est disposé en vis-à-vis de la baie de refroidissement 18. La grille 20 permet notamment de protéger ce module de refroidissement 22.

Comme le montre la figure 2 le module de refroidissement 22 est destiné à être traversé par un flux d'air F parallèle à la direction X et allant de l'avant vers l'arrière du véhicule 10. Cette direction X correspond plus particulièrement à une direction longitudinale X allant de l'avant vers l'arrière du module de refroidissement 22. Dans la présente demande, on qualifie un élément d'en « amont » ou d'en « aval » selon la direction longitudinale X du module de refroidissement 22, un élément qui est respectivement disposé plus vers l'avant ou vers l'arrière qu'un autre élément. L'avant correspond à l'avant du véhicule automobile 10 à l'état monté ou alors la face du module de refroidissement 22 par laquelle le flux d'air F est destiné à entrer dans le module de refroidissement 22. L'arrière correspond quant à lui à l'arrière du véhicule automobile 10 ou alors à la face du module de refroidissement 22 par laquelle le flux d'air F est destiné à ressortir du module de refroidissement 22.

Le module de refroidissement 22 comprend au moins un échangeur de chaleur 24, 26, 28, 29 comme représenté sur la fig.2. L'au moins un échangeur de chaleur 24, 26, 28, 29 est plus particulièrement disposé au sein d'un ensemble d'échangeurs de chaleur 23. Cet ensemble d'échangeurs de chaleur 23 peut comporter plus particulièrement un premier échangeur de chaleur 24, un deuxième échangeur de chaleur 26 et un troisième échangeur de chaleur 28.

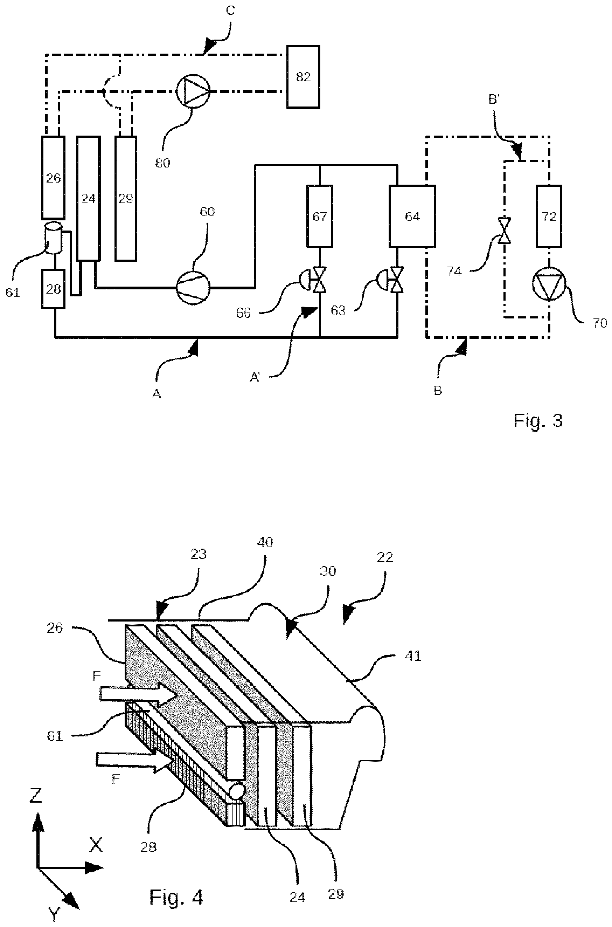

Le premier échangeur de chaleur 24 est notamment configuré pour dissiper de l'énergie calorifique dans le flux d'air F. Ce premier échangeur de chaleur 24 peut plus particulièrement être un condenseur d'un circuit de refroidissement A (visible à la figure 3) permettant le refroidissement des batteries du véhicule 10. Ce circuit de refroidissement A peut également être configuré pour permettre la gestion thermique d'un flux d'air à destination de l'habitacle. Dans ce cas, le circuit de refroidissement A peut être un circuit de climatisation notamment inversible. Le premier échangeur de chaleur 24 peut ainsi être un évapo-condenseur dans le cadre d'un circuit de climatisation inversible (non représenté).

Le troisième échangeur de chaleur 28 est quant à lui configuré pour être un sous-refroidisseur connecté au sein du circuit de refroidissement A. Ce troisième échangeur de chaleur 28 est ainsi lui aussi configuré pour dissiper de l'énergie calorifique dans le flux d'air F.

Le deuxième échangeur de chaleur 26 est également configuré pour relâcher de l'énergie calorifique dans le flux d'air F. Ce deuxième échangeur de chaleur 26 peut plus particulièrement être un radiateur connecté à un circuit de gestion thermique C (visible sur la figure 3) d'éléments électriques tel que le moteur électrique 12.

Dans l'exemple illustré à la figure 2, l'ensemble d'échangeurs de chaleur 23 comporte un quatrième échangeur de chaleur 29 lui aussi configuré pour relâcher de l'énergie calorifique dans le flux d'air F. Ce quatrième échangeur de chaleur 29 peut plus particulièrement lui aussi être un radiateur basse température. Ce quatrième échangeur de chaleur 29 peut être est connecté au circuit de gestion thermique C en parallèle du deuxième échangeur de chaleur 26 comme illustré sur la figure 3. Cependant, il est tout à fait possible d'imaginer un mode de réalisation (non représenté) dans lequel le quatrième échangeur de chaleur 29 est connecté à un autre circuit de gestion thermique dédié par exemple au refroidissement de l'électronique de puissance.

Toujours selon la figure 2, le module de refroidissement 22 comporte essentiellement un boîtier ou carénage 40 formant un canal interne entre deux extrémités 40a, 40b opposées et à l'intérieur duquel est disposé l'ensemble d'échangeurs de chaleur 23. Ce canal interne est de préférence orienté parallèlement à la direction longitudinale X de sorte que l'extrémité amont 40a est orientée vers l'avant du véhicule 10 en regard de la baie de refroidissement 18 et de sorte que l'extrémité aval 40b est orientée vers l'arrière du véhicule 10.

Le module de refroidissement 22 comporte également un premier boîtier collecteur 41 disposé en aval de l'ensemble d'échangeurs de chaleur 23 selon la direction longitudinale X du module de refroidissement 22. Ce premier boîtier collecteur 41 comporte une sortie 45 du flux d'air F, Ce premier boîtier collecteur 41 permet ainsi de récupérer le flux d'air traversant l'ensemble d'échangeurs de chaleur 23 et d'orienter ce flux d'air vers la sortie 45. Le premier boîtier collecteur 41 peut venir de matière avec le carénage 40 ou bien être une pièce rapportée fixée à l'extrémité aval 40b dudit carénage 40.

Dans l'exemple illustré à la figure 2, le module de refroidissement 22 comprend également au moins un ventilateur tangentiel, aussi nommé turbomachine tangentielle 30 configuré de sorte à générer le flux d'air F à destination de l'ensemble d'échangeurs de chaleur 23. La turbomachine tangentielle 30 comprend un rotor ou turbine (ou hélice tangentielle) non représentée. La turbine a une forme sensiblement cylindrique. La turbine comporte avantageusement plusieurs étages de pales (ou aubes). La turbine est montée rotative autour d'un axe de rotation A, par exemple parallèle à la direction Y. Le diamètre de la turbine est par exemple compris entre 35 mm et 200 mm pour limiter sa taille. La turbomachine 30 est ainsi compacte.

La turbomachine tangentielle 30 peut également comporter un moteur 31 configuré pour mettre en rotation la turbine. Le moteur 31 est par exemple adapté à entraîner la turbine en rotation, à une vitesse comprise entre 200 tour/min et 14 000 tour/min. Ceci permet notamment de limiter le bruit généré par la turbomachine tangentielle 30.

La turbomachine tangentielle 30 est de préférence disposée dans le premier boîtier collecteur 41. La turbomachine tangentielle 30 est alors configurée pour aspirer de l'air afin de générer le flux d'air F traversant l'ensemble d'échangeurs de chaleur 23. Le premier boîtier collecteur 41 forme alors une volute au centre de laquelle est disposée la turbine 32 et dont l'évacuation d'air à la sortie 45 du premier boîtier collecteur 41 permet la sortie du flux d'air F.

Dans l'exemple illustré à la figure 2, la turbomachine tangentielle 30 est dans une position haute, notamment dans le tiers supérieur du premier boîtier collecteur 41, de manière préférée dans le quart supérieur du premier boîtier collecteur 41. Ceci permet notamment de protéger la turbomachine tangentielle 30 en cas de submersion et/ou de limiter l'encombrement du module de refroidissement 22 dans sa partie basse.

Il est néanmoins possible d'imaginer que la turbomachine tangentielle 30 soit dans une position basse, notamment dans le tiers inférieur du premier boîtier collecteur 41. Cela permettrait de limiter l'encombrement du module de refroidissement 22 dans sa partie haute. Alternativement, la turbomachine tangentielle 30 peut être dans une position médiane, notamment dans le tiers médian de la hauteur du premier boîtier collecteur 41, par exemple pour des raisons d'intégration du module de refroidissement 22 dans son environnement.

En outre, dans l'exemple illustré à la figure 2, la turbomachine tangentielle 30 fonctionne en aspiration, c'est-à-dire qu'elle aspire l'air ambiant pour qu'il traverse l'ensemble d'échangeurs de chaleur 23. Alternativement, la turbomachine tangentielle 30 peut fonctionner par soufflage, soufflant l'air vers l'ensemble d'échangeurs de chaleur 23. Pour cela, la turbomachine tangentielle 30 sera disposée en amont de l'ensemble d'échangeurs de chaleur 23.

Le module de refroidissement 22 peut également comporter un deuxième boîtier collecteur 42 disposé en amont de l'ensemble d'échangeurs de chaleur 23. Ce deuxième boîtier collecteur 42 comporte une entrée 42a du flux d'air F en provenance de l'extérieur du véhicule 10. L'entrée 42a peut notamment être disposée en regard de la baie de refroidissement 18. Cette entrée 42a peut également comporter la grille 20 de protection. Le deuxième boîtier collecteur 42 peut venir de matière avec le carénage 40 ou bien être une pièce rapportée fixée à l'extrémité amont 40a dudit carénage 40.

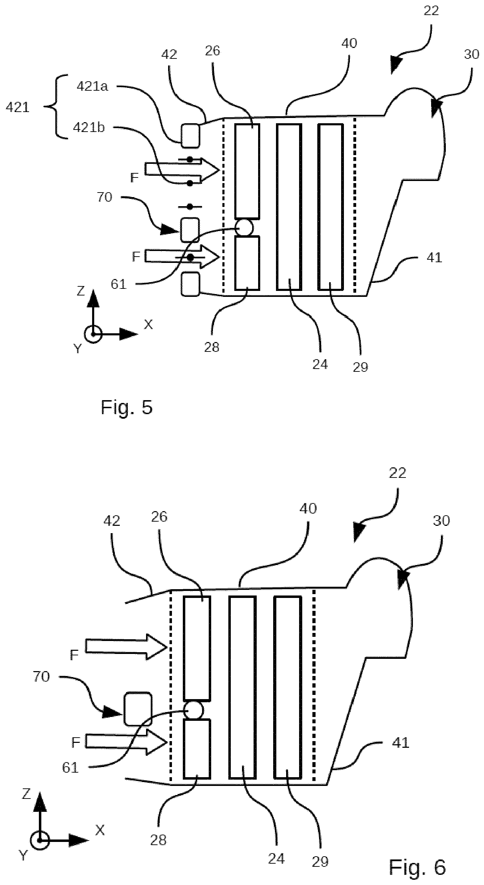

De plus, l'entrée 42a du deuxième boîtier collecteur 42 peut comporter un dispositif d'obturation de face avant 421 (visible sur la figure 5) configuré pour permettre au flux d'air F en provenance de l'extérieur du véhicule 10 de passer au travers de ladite première entrée 42a dans un état ouvert et obturer ladite première entrée du flux d'air 42a dans un état fermé. Le dispositif d'obturation de face avant 421 peut se présenter sous différentes formes comme par exemple sous la forme d'une pluralité de volets 421b montés pivotants entre une position d'ouverture et une position de fermeture au sein d'un cadre 421a. Les volets 421b peuvent être des volets de type drapeau mais d'autres types de volets comme des volets papillons sont tout à fait envisageables.

La figure 3 montre une représentation schématique du circuit de refroidissement A et du circuit de gestion thermique C auxquels sont connectés les premier 24, deuxième 26 et troisième 28 échangeurs de chaleur.

A l'intérieur du circuit de gestion thermique C, représenté en traits pointillés, est destiné à circuler un fluide caloporteur. Le circuit de gestion thermique C peut ainsi comporter dans le sens de circulation d'un fluide caloporteur, une pompe 80, un premier refroidisseur 82 et le deuxième échangeur de chaleur 26. Le premier refroidisseur 82 peut notamment être une interface d'échange thermique par exemple disposée au niveau d'éléments électriques tel que le moteur électrique 12 et/ou de l'électronique de puissance afin de gérer leur température.

Comme énoncé plus haut, dans l'exemple illustré à la figure 3, le circuit de gestion thermique C peut comporter également le troisième échangeur de chaleur 29. Le troisième échangeur de chaleur 29 est ici connecté au circuit de gestion thermique C en parallèle du deuxième échangeur de chaleur 26.

Sur la figure 3, le circuit de refroidissement A est représenté quant à lui en traits pleins. Au sein de ce circuit de refroidissement A est destiné à circuler un fluide réfrigérant. Le circuit de refroidissement A comporte dans le sens de circulation du fluide réfrigérant, un compresseur 60 et le premier échangeur de chaleur 24, configuré pour être un condenseur destiné à être traversé par le flux d'air F. En aval du premier échangeur de chaleur 24, le circuit de refroidissement A comporte le troisième échangeur de chaleur 28 configuré pour être un sous-refroidisseur. En aval du troisième échangeur de chaleur 28, le circuit de refroidissement A comporte un premier dispositif de détente 63 et un deuxième refroidisseur 64 notamment dédié à la gestion thermique des batteries. Le deuxième refroidisseur 64 peut être un évaporateur pour un refroidissement direct des batteries ou bien, comme illustré à la figure 3, un échangeur de chaleur bi-fluide agencé conjointement sur une boucle annexe B pour un refroidissement indirect des batteries.

Cette boucle annexe B peut notamment comporter une pompe 70 et une interface de gestion thermique 72, par exemple une plaque froide, au contact des batteries. La boucle annexe B peut également comporter une dérivation B' de contournement du cinquième échangeur de chaleur 67 comportant une vanne 74 afin, par exemple, de réaliser une homogénéisation de la température des batteries.

Le circuit de refroidissement A peut comporter une branche de dérivation A' connectée en parallèle du premier dispositif de détente 63 et du premier refroidisseur 64. Cette branche de dérivation A' comporte un deuxième dispositif de détente 66 disposé en amont d'un troisième refroidisseur 67. Ce troisième refroidisseur 67 peut notamment être un évaporateur destiné à être traversé par un flux d'air à destination de l'habitacle.

Entre le premier 24 et le troisième 28 échangeur de chaleur, le circuit de refroidissement A comporte une bouteille déshydratante 61. Cette bouteille déshydratante 61 est notamment connectée au sein du circuit de refroidissement A en aval du premier échangeur de chaleur 24, entre ledit premier échangeur de chaleur 24 et le troisième échangeur de chaleur 28, dans le sens de circulation du fluide réfrigérant circulant dans ledit circuit de refroidissement A.

Comme le montrent les figures 2 à 4, le troisième échangeur de chaleur 28 est disposé, au sein de l'ensemble d'échangeurs de chaleur 23, le plus en amont selon la direction longitudinale X dudit module de refroidissement 22. Cela permet à ce dernier de bénéficier de l'air le plus « frais » du flux d'air F. Le troisième échangeur de chaleur 28 peut ainsi assurer sa fonction de sous-refroidissement du fluide réfrigérant circulant dans le circuit de refroidissement A efficacement. Le coefficient de performance du circuit de refroidissement A est ainsi élevé et sa puissance de refroidissement est suffisante pour par exemple assurer à la fois le refroidissement d'un flux d'air à destination de l'habitacle et le refroidissement des batteries.

Toujours comme illustré aux figures 2 à 4, le deuxième échangeur de chaleur 26 est disposé, au sein de l'ensemble d'échangeurs de chaleur 23, en amont du premier échangeur de chaleur 24 selon la direction longitudinale X du module de refroidissement 22, au sein de l'ensemble d'échangeurs de chaleur 23. Plus particulièrement, le deuxième échangeur de chaleur 26 et le troisième échangeur de chaleur 28 peuvent être disposés sur un même plan au sein de l'ensemble d'échangeurs de chaleur 23, en amont du premier échangeur de chaleur 24 selon la direction longitudinale X du module de refroidissement 22. Cela permet ainsi au deuxième 26 et au troisième 28 échangeur de chaleur d'être tous deux les plus en amont selon la direction longitudinale X du module de refroidissement 22. Ainsi, à la fois le deuxième 26 et le troisième 28 échangeur de chaleur bénéficie de l'air le plus « frais » afin de dissiper de l'énergie calorifique le plus efficacement possible. De préférence, la hauteur cumulée du deuxième 26 et du troisième 28 échangeur de chaleur est sensiblement égale à celle du premier échangeur de chaleur 24. Cela permet ainsi de conserver un ensemble d'échangeurs de chaleur 23 dans lequel chaque couche ou strate d'échangeur de chaleur à des dimensions similaires. Cela permet également de limiter le nombre d'échangeurs de chaleur que le flux d'air F traverse et donc cela limite les pertes de charge. Il est ainsi par exemple possible d'ajouter le quatrième échangeur de chaleur 29 en aval du premier échangeur de chaleur 24 dans le flux d'air F.

Toujours selon les figures 2 à 4, le troisième échangeur de chaleur 28 est de préférence disposé sous le deuxième échangeur de chaleur 26. Par « disposé sous » on entend ici qu'à l'état monté au sein du véhicule automobile 10, le troisième échangeur de chaleur 28 est situé au plus près du sol par rapport au deuxième échangeur de chaleur 26.

Comme illustré à la figure 4, au sein du module de refroidissement, la bouteille déshydratante 61 est disposée dans une partie amont du module de refroidissement 22 selon la direction longitudinale X allant de l'avant vers l'arrière dudit module de refroidissement 22. Plus précisément, la bouteille déshydratante 61 est disposée en aval et en regard d'un élément déflecteur 70 (visible sur les figures 5 et 6). Ce positionnement de la bouteille déshydratante 61 derrière un élément déflecteur 70 permet de limiter les perturbations du flux d'air F engendrées par la bouteille déshydratante 61. En effet, seules les perturbations et turbulences provoquées par l'élément déflecteur 70 se répercutent au niveau des échangeurs de chaleur 24, 26, 28 et 29.

Comme illustré à la figure 4, l'au moins un échangeur de chaleur 24, 26, 28, 29 disposé le plus en amont selon la direction longitudinale X dudit module de refroidissement 22, ici le deuxième échangeur de chaleur 26, et la bouteille déshydratante 61 peuvent être disposés sur un même plan. Cela permet notamment que le module de refroidissement 22 a un encombrement réduit. Plus particulièrement, la bouteille déshydratante 61 peut être disposée de sorte que son axe, ici l'axe transversale Y, soit perpendiculaire à l'axe Z de la hauteur dudit au moins un échangeur de chaleur 24, 26, 28, 39. La bouteille déshydratante 61 est alors « couchée » au-dessous ou alors au-dessus dudit au moins un échangeur de chaleur 24, 26, 28, 39.

Dans le cas où le module de refroidissement 22 comporte deux échangeurs de chaleur, ici le deuxième 26 et le troisième 28 échangeur de chaleur, disposés sur un même plan et disposés le plus en amont selon la direction longitudinale X dudit module de refroidissement 22, la bouteille déshydratante 61 peut plus particulièrement être disposée entre lesdits échangeurs de chaleur 26, 28, comme illustré sur les figures 4 à 6.

De préférence, l'élément déflecteur 70 est un élément pré-existant au sein du véhicule automobile 10 ou du module de refroidissement22. Ainsi, en plaçant la bouteille déshydratante 61 derrière ce dernier, il n'est pas généré de turbulences ou perturbations du flux d'air F supplémentaires autres que celles déjà existantes.

Selon une première variante illustrée à la figure 5, l'élément déflecteur 70 peut être une traverse d'un cadre 421a d'un dispositif d'obturation de face avant 421 disposé en amont de l'au moins un échangeur de chaleur 24, 26, 28, 29. Le dispositif d'obturation de face avant 421 comporte ici une portion dite supérieure en regard du deuxième échangeur de chaleur 26 et une portion dite inférieure en regard du troisième échangeur de chaleur 28. La bouteille déshydratante 61, disposée entre les deuxième 26 et troisième 28 échangeurs de chaleur, est alors masquée par la traverse du cadre 412a séparant ces deux portions. Le flux d'air F peut alors s'écouler dans ces deux portions sans être perturbé par la bouteille déshydratante 61.

Selon une deuxième variante illustrée à la figure 6, l'élément déflecteur 70 peut être une poutre transversale du châssis du véhicule automobile 10 disposée en amont de l'au moins un échangeur de chaleur 24, 26, 28, 29. De même que pour la première variante, la poutre transversale du châssis du véhicule automobile 10 définie une portion dite supérieure en regard du deuxième échangeur de chaleur 26 et une portion dite inférieure en regard du troisième échangeur de chaleur 28. La bouteille déshydratante 61, disposée entre les deuxième 26 et troisième 28 échangeurs de chaleur, est alors masquée par la poutre transversale définissant ces deux portions. Le flux d'air F peut alors s'écouler dans ces deux portions sans être perturbé par la bouteille déshydratante 61.

Ainsi, on voit bien que le placement de la bouteille déshydratante 61 en aval et en regard d'un élément déflecteur 70 permet une meilleure circulation du flux d'air F et donc des performances optimales pour les différents échangeurs de chaleurs et permet un encombrement moindre du module de refroidissement 22.

## Revendications

1. Module de refroidissement (22) pour véhicule automobile (10) électrique ou hybride, ledit module de refroidissement (22) étant destiné à être traversé par un flux d'air (F) et comportant au moins un échangeur de chaleur (24, 26, 28, 29) et une bouteille déshydratante (61) connectée au sein d'un circuit de refroidissement (A),
la bouteille déshydratante (61) étant disposée dans une partie amont du module de refroidissement (22) selon une direction longitudinale (X) allant de l'avant vers l'arrière dudit module de refroidissement (22),
**caractérisé en ce que**, selon la direction longitudinale (X) dudit module de refroidissement (22), la bouteille déshydratante (61) est disposée en aval et en regard d'un élément déflecteur (70).

2. Module de refroidissement (22) selon la revendication précédente, caractérisé en ce l'au moins un échangeur de chaleur (24, 26, 28, 29) disposé le plus en amont selon la direction longitudinale (X) dudit module de refroidissement (22) et la bouteille déshydratante (61) sont disposés sur un même plan.

3. Module de refroidissement (22) selon la revendication précédente, **caractérisé en ce que** la bouteille déshydratante (61) est disposée de sorte que son axe soit perpendiculaire à l'axe de la hauteur dudit au moins un échangeur de chaleur (24, 26, 28).

4. Module de refroidissement (22) selon la revendication 3, **caractérisé en ce que** l'élément déflecteur (70) est une traverse d'un cadre (421a) d'un dispositif d'obturation de face avant (421) disposé en amont de l'au moins un échangeur de chaleur (24, 26, 28, 29).

5. Module de refroidissement (22) selon la revendication 3, **caractérisé en ce que** l'élément déflecteur (70) est une poutre transversale du châssis du véhicule automobile disposée en amont de l'au moins un échangeur de chaleur (24, 26, 28, 29).

6. Module de refroidissement (22) selon l'une quelconque des revendications 3 à 5, **caractérisé en ce que** le module de refroidissement (22) comporte deux échangeurs de chaleur (26, 28) disposés sur un même plan et disposés le plus en amont selon la direction longitudinale (X) dudit module de refroidissement (22), la bouteille déshydratante (61) étant disposée entre lesdits échangeurs de chaleur (26, 28).

7. Module de refroidissement (22) selon l'une quelconque des revendications précédentes, **caractérisé en ce qu'**il comporte :
- un premier échangeur de chaleur (24) configuré pour être un condenseur connecté au sein d'un circuit de refroidissement (A),
- un deuxième échangeur de chaleur (26) configuré pour être un radiateur basse température connecté au sein d'un circuit de gestion thermique (C), et
- un troisième échangeur de chaleur (28) configuré pour être un sous-refroidisseur connecté au sein du circuit de refroidissement (A).

8. Module de refroidissement (22) selon la revendication précédente, **caractérisé en ce que** le circuit de gestion thermique (C) comporte dans le sens de circulation d'un fluide caloporteur :
- une pompe (80),
- un premier refroidisseur (82), et
- le deuxième échangeur de chaleur (26).

9. Module de refroidissement (22) selon l'une quelconque des revendications 7 ou 8, **caractérisé en ce que** le circuit de refroidissement (A) comporte dans le sens de circulation d'un fluide réfrigérant :
- un compresseur (60),
- le premier échangeur de chaleur (24),
- la bouteille déshydratante (61),
- le troisième échangeur de chaleur (28),
- un premier dispositif de détente (63), et
- un deuxième refroidisseur (64).

10. Module de refroidissement (22) selon la revendication précédente, **caractérisé en ce que** le circuit de refroidissement (A) comporte une branche de dérivation (A') connectée en parallèle du premier dispositif de détente (63) et du premier refroidisseur (64), ladite branche de dérivation (A') comportant un deuxième dispositif de détente (66) disposé en amont d'un troisième refroidisseur (67).

## Patentansprüche

1. Kühlmodul (22) für ein Elektro- oder Hybridkraftfahrzeug (10), wobei das Kühlmodul (22) dazu bestimmt ist, von einem Luftstrom (F) durchquert zu werden, und mindestens einen Wärmetauscher (24, 26, 28, 29) und eine Trockenmittelflasche (61), die in einen Kühlkreislauf (A) geschaltet ist, aufweist,
wobei die Trockenmittelflasche (61) in einer von vorn nach hinten verlaufenden Längsrichtung (X) des Kühlmoduls (22) in einem stromaufwärtigen Teil des Kühlmoduls (22) angeordnet ist,
**dadurch gekennzeichnet, dass** die Trockenmittelflasche (61) in der Längsrichtung (X) des Kühlmoduls (22) stromabwärts und gegenüber von einem Luftleitelement (70) angeordnet ist.

2. Kühlmodul (22) nach dem vorhergehenden Anspruch, **dadurch gekennzeichnet, dass** der mindestens einen Wärmetauscher (24, 26, 28, 29), der in der Längsrichtung (X) des Kühlmoduls (22) am weitesten stromaufwärts angeordnet ist, und die Trockenmittelflasche (61) in derselben Ebene angeordnet sind.

3. Kühlmodul (22) nach dem vorhergehenden Anspruch, **dadurch gekennzeichnet, dass** die Trockenmittelflasche (61) so angeordnet ist, dass ihre Achse senkrecht zur Achse der Höhe des mindestens einen Wärmetauschers (24, 26, 28) ist.

4. Kühlmodul (22) nach Anspruch 3, **dadurch gekennzeichnet, dass** das Luftleitelement (70) eine Querstrebe eines Rahmens (421a) einer Verschlussvorrichtung der Vorderseite (421) ist, die stromaufwärts des mindestens einen Wärmetauschers (24, 26, 28, 29) angeordnet ist.

5. Kühlmodul (22) nach Anspruch 3, **dadurch gekennzeichnet, dass** das Luftleitelement (70) ein Querträger des Fahrgestells des Kraftfahrzeugs ist, der stromaufwärts des mindestens einen Wärmetauschers (24, 26, 28, 29) angeordnet ist.

6. Kühlmodul (22) nach einem der Ansprüche 3 bis 5, **dadurch gekennzeichnet, dass** das Kühlmodul (22) zwei Wärmetauscher (26, 28) aufweist, die in derselben Ebene angeordnet sind und die in der Längsrichtung (X) des Kühlmoduls (22) am weitesten stromaufwärts angeordnet sind, wobei die Trockenmittelflasche (61) zwischen diesen Wärmetauschern (26, 28) angeordnet ist.

7. Kühlmodul (22) nach einem der vorhergehenden Ansprüche, **dadurch gekennzeichnet, dass** es aufweist:
- einen ersten Wärmetauscher (24), der dafür ausgelegt ist, ein Kondensator zu sein, der in einen Kühlkreislauf (A) geschaltet ist,
- einen zweiten Wärmetauscher (26), der dafür ausgelegt ist, ein Niedertemperaturkühler zu sein, der in einen Wärmemanagementkreislauf (C) geschaltet ist, und
- einen dritten Wärmetauscher (28), der dafür ausgelegt ist, ein Unterkühler zu sein, der in den Kühlkreislauf (A) geschaltet ist.

8. Kühlmodul (22) nach dem vorhergehenden Anspruch, **dadurch gekennzeichnet, dass** Wärmemanagementkreislauf (C) in der Strömungsrichtung eines Wärmeträgerfluids aufweist:
- eine Pumpe (80),
- einen ersten Kühler (82) und
- den zweiten Wärmetauscher (26).

9. Kühlmodul (22) nach einem der Ansprüche 7 oder 8, **dadurch gekennzeichnet, dass** der Kühlkreislauf (A) in der Strömungsrichtung eines Kältemittels aufweist:
- einen Verdichter (60),
- den ersten Wärmetauscher (24),
- die Trockenmittelflasche (61),
- den dritten Wärmetauscher (28),
- eine erste Entspannungsvorrichtung (63) und
- einen zweiten Kühler (64).

10. Kühlmodul (22) nach dem vorhergehenden Anspruch, **dadurch gekennzeichnet, dass** der Kühlkreislauf (A) einen Umgehungszweig (A') aufweist, der zu der ersten Entspannungsvorrichtung (63) und zum ersten Kühler (64) parallel geschaltet ist, wobei der Umgehungszweig (A') eine zweite Entspannungsvorrichtung (66) aufweist, die stromaufwärts eines dritten Kühlers (67) angeordnet ist.

## Claims

1. Cooling module (22) for an electric or hybrid motor vehicle (10), said cooling module (22) being designed to have an air flow (F) passing through it, and comprising at least one heat exchanger (24, 26, 28, 29) and a receiver-dryer (61) connected into a cooling circuit (A), the receiver-dryer (61) being positioned in an upstream part of the cooling module (22) considered in a longitudinal direction (X) extending from the front toward the rear of said cooling module (22),
**characterized in that**, in the longitudinal direction (X) of said cooling module (22), the receiver-dryer (61) is positioned downstream of and facing a deflector element (70) .

2. Cooling module (22) according to the preceding claim, **characterized in that** the at least one heat exchanger (24, 26, 28, 29) positioned furthest upstream in the longitudinal direction (X) of said cooling module (22) and the receiver-dryer (61) are positioned in the one same plane.

3. Cooling module (22) according to the preceding claim, **characterized in that** the receiver-dryer (61) is positioned in such a way that its axis is perpendicular to the axis of the height of said at least one heat exchanger (24, 26, 28).

4. Cooling module (22) according to Claim 3, **characterized in that** the deflector element (70) is a crossmember of a frame (421a) of a front-face shutoff device (421) positioned upstream of the at least one heat exchanger (24, 26, 28, 29).

5. Cooling module (22) according to Claim 3, **characterized in that** the deflector element (70) is a cross-beam of the chassis of the motor vehicle, positioned upstream of the at least one heat exchanger (24, 26, 28, 29).

6. Cooling module (22) according to any one of Claims 3 to 5, **characterized in that** the cooling module (22) comprises two heat exchangers (26, 28) which are positioned in the one same plane in the most upstream position in the longitudinal direction (X) of said cooling module (22), the receiver-dryer (61) being positioned between said heat exchangers (26, 28).

7. Cooling module (22) according to any one of the preceding claims, **characterized in that** it comprises:
- a first heat exchanger (24) configured to be a condenser connected within a cooling circuit (A),
- a second heat exchanger (26) configured to be a lowtemperature radiator connected within a thermal management circuit (C), and
- a third heat exchanger (28) configured to be a subcooler connected within the cooling circuit (A).

8. Cooling module (22) according to the preceding claim, **characterized in that** the thermal management circuit (C) comprises, in the direction of circulation of a heat-transport fluid:
- a pump (80),
- a first cooler (82), and
- the second heat exchanger (26).

9. Cooling module (22) according to either one of Claims 7 and 8, **characterized in that** the cooling circuit (A) comprises, in the direction of circulation of a refrigerant:
- a compressor (60),
- the first heat exchanger (24),
- the receiver-dryer (61),
- the third heat exchanger (28),
- a first expansion device (63), and
- a second cooler (64).

10. Cooling module (22) according to the preceding claim, **characterized in that** the cooling circuit (A) comprises a bypass leg (A') connected in parallel with the first expansion device (63) and with the first cooler (64), said bypass leg (A') comprising a second expansion device (66) positioned upstream of a third cooler (67).
